# EUROPÄISCHE PATENTSCHRIFT

(11) **EP 2 427 395 B1**
(45) Veröffentlichungstag und Bekanntmachung des Hinweises auf die Patenterteilung: **16.01.2013**
(21) Anmeldenummer: 10718894.8
(22) Anmeldetag: 05.05.2010
(51) Int. Cl.: B65G 17/08

(54) **GLIED FÜR EIN GLIEDERBAND**
LINK FOR A LINK CONVEYOR
PALETTE POUR CONVOYEUR À PALETTES

(30) Priorität: 07.05.2009 DE 102009020304
(43) Veröffentlichungstag der Anmeldung: 14.03.2012
(73) Patentinhaber: Hastem-Müller, Stefan, 86720 Nördlingen (DE)
(72) Erfinder: Hastem-Müller, Stefan, 86720 Nördlingen (DE)
(74) Vertreter: Beier, Ralph
(86) Internationale Anmeldenummer: PCT/EP2010/002762
(87) Internationale Veröffentlichungsnummer: WO 2010/130363

(56) Entgegenhaltungen:
- GB-A- 831 327
- US-A- 3 262 549
- US-A- 4 084 687
- US-A1- 2002 148 708
- US-A1- 2005 067 262

## Beschreibung

Die Erfindung betrifft ein neuartiges Glied für ein Gliederband, insbesondere für ein Transportgliederband. Weiterhin betrifft die Erfindung ein Gliederband, das aus derartigen Gliedern zusammengesetzt ist sowie ein Gliederbandsystem, das ein derartiges Gliederband aufweist, und eine Demontagezange dafür.

Es ist aus dem Stand der Technik bekannt, zum Transportieren von Stückgut Transportbänder einzusetzen, die als Gliederbänder ausgebildet sein können und aus zahlreichen Gliedern bestehen, die formschlüssig miteinander verbunden sind. Bei den bekannten Gliederbändern erfolgt die formschlüssige Verbindung zwischen den benachbarten Gliedern durch eine Stiftverbindung. Hierzu weisen die einzelnen Glieder fingerförmige Vorsprünge auf, die in Bandlaufrichtung hervorragen, wobei die fingerförmigen Vorsprünge der benachbarten Glieder im montierten Zustand fingerförmig ineinander greifen und quer verlaufende Bohrungen enthalten, in die der Verbindungsstift eingeschoben wird, um die benachbarten Glieder formschlüssig miteinander zu verbinden.

Nachteilig an den vorstehend beschriebenen herkömmlichen Gliederbändern mit einer Stiftverbindung ist zunächst die Tatsache, dass zur Herstellung der Stiftverbindung nicht nur die beiden miteinander zu verbindenden Glieder erforderlich sind, sondern ein zusätzliches Bauteil in Form des Verbindungsstifts.

Ein weiterer Nachteil der bekannten Stiftverbindung besteht darin, dass zum Lösen der Stiftverbindung in der Regel Werkzeug erforderlich ist, um den Verbindungsstift wieder zu entfernen.

Ferner lassen sich die Verbindungsstifte bei den herkömmlichen Stiftverbindungen von Gliederbändern schon nach kurzer Laufzeit nur noch schlecht lösen.

Schließlich muss bei den bekannten Stiftverbindungen sichergestellt werden, dass sich der Verbindungsstift im Betrieb nicht selbst wieder löst, was beispielsweise durch die im Betrieb auftretenden Vibrationen verursacht werden kann. Die bekannten Stiftverbindungen von Gliederbändern benötigen deshalb seitliche Zusatzsicherungen, die verhindern, dass die Verbindungsstifte im Betrieb seitlich axial auswandern.

Aus US 2002/148708 A1 ist ein Glied gemäß dem Oberbegriff des Hauptanspruchs bekannt, wobei sich dieses Glied zum Zusammensetzen eines Gliederbandes eignet. Allerdings sind hierbei separate Verzahnungselemente erforderlich, um eine Verzahnung des fertigen Gliederbandes zu bilden.

Ferner ist zum Stand der Technik hinzuweisen auf US 2005/067262 A1, US 4 084 687 A, US 3 262 549 A und GB 831 327 A.

Der Erfindung liegt deshalb die Aufgabe zugrunde, ein verbessertes Glied für ein Gliederband zu schaffen.

Diese Aufgabe wird durch ein erfindungsgemäßes Glied gemäß dem Hauptanspruch gelöst.

Die Erfindung umfasst die allgemeine technische Lehre, die benachbarten Glieder eines Gliederbandes nicht durch eine herkömmliche Stiftverbindung miteinander zu verbinden, sondern durch eine formschlüssige Steckverbindung, die aus einem Steckelement an dem einen Glied und einen komplementär geformten Steckelement an dem anderen Glied besteht. Dies bietet gegenüber der eingangs erwähnten bekannten Stiftverbindung den Vorteil, dass kein zusätzliches Verbindungselement (z.B. Stift) erforderlich ist.

Erfindungsgemäß ist die Steckverbindung eine Rastverbindung, die aus zwei komplementären Rastelementen an den benachbarten Gliedern besteht. Das erfindungsgemäße Glied weist deshalb mindestens ein Rastelement auf, um das Glied mittels der formschlüssigen Rastverbindung mit dem komplementären Rastelement eines angrenzenden weiteren Glieds des Gliederbandes zu verbinden.

Hierbei ist zu erwähnen, dass der im Rahmen der Erfindung verwendete Begriff einer Rastverbindung auch Schnappverbindungen umfasst.

Gemäß der Erfindung weist das Glied zwei komplementäre Rastelemente an den in Bandlaufrichtung gegenüberliegenden Enden des Gliedes auf, so dass mehrere baugleiche Glieder zu dem Gliederband zusammengesetzt werden, indem die komplementären Rastelemente jeweils paarweise miteinander verrastet werden.

Gemäß der Erfindung weist das Glied auch eine Verzahnung auf, die wahlweise innen oder außen angeordnet sein kann, wobei die komplementären Rastelemente zweier benachbarter Glieder im zusammengesetzten Zustand jeweils paarweise gemeinsam einen Zahn der Verzahnung bilden. Die einzelnen Rastelemente sind also so geformt, dass sie einen Teil eines Zahns der Verzahnung bilden, wobei die komplementären Rastelemente hinsichtlich ihrer Form so angepasst sind, dass sie im zusammengesetzten Zustand einen Zahn bilden.

Die Rastverbindung ist hierbei vorzugsweise so ausgebildet, dass das zusammengesetzte Gliederband an den Stoßstellen benachbarter Glieder eine im Wesentlichen glatte, absatzfreie, lückenlose und/oder ebene Außenfläche oder Innenfläche aufweist.

Weiterhin ist zu erwähnen, dass die Rastverbindung eine bestimmte Rastrichtung aufweist, in der die komplementären Rastelemente zum Verbinden oder Trennen gegenläufig bewegt werden müssen.

In einer Variante der Erfindung ist die Rastrichtung quer zur Bandebene ausgerichtet, insbesondere rechtwinklig zur Bandebene. Dies bedeutet, dass die komplementären Rastelemente quer zur Bandrichtung gegenläufig bewegt werden müssen, um die komplementären Rastelemente miteinander zu verbinden oder voneinander zu trennen.

In einer anderen Variante der Erfindung verläuft die Rastrichtung dagegen parallel zur Bandebene und/oder parallel zur Bandlaufrichtung. Dies bedeutet entsprechend, dass die komplementären Rastelemente zum Verbinden oder Trennen parallel zur Bandebene und/oder parallel zur Bandlaufrichtung gegenläufig bewegt werden müssen, um die komplementären Rastelemente miteinander zu verbinden oder voneinander zu trennen.

Im Rahmen der Erfindung wird jedoch die vorstehend genannte erste Variante bevorzugt, wonach die Rastrichtung quer zur Bandebene ausgerichtet ist. Dies ist vorteilhaft, weil im Betrieb des Gliederbandes Zugkräfte in Bandlaufrichtung wirken, die bei einer Querausrichtung der Rastrichtung nicht zu einem unbeabsichtigten Trennen der Rastverbindung führen können.

Ferner ist zu erwähnen, dass die Rastverbindung vorzugsweise werkzeugfrei lösbar ist und werkzeugfrei zusammengefügt werden kann. Dies bedeutet, dass die komplementären Rastelemente manuell verrastet und voneinander getrennt werden können, was die Montage vereinfacht.

Darüber hinaus ist zu erwähnen, dass die Rastverbindung mit einer bestimmten Fügekraft zusammengefügt werden kann, wohingegen zum Trennen der Rastverbindung eine bestimmte Trennkraft erforderlich ist. Vorzugsweise ist die Rastverbindung so konstruiert, dass die zum Trennen der komplementären Rastelemente erforderliche Trennkraft größer ist als die zum Verbinden der komplementären Rastelemente erforderliche Fügekraft. Eine derartige Konstruktion der Rastverbindung kombiniert den Vorteil einer leichten Montage mit geringen Bedienkräften mit dem Vorteil einer hohen mechanischen Belastbarkeit im montierten Zustand.

In einer Variante der Erfindung weist das Glied und damit auch das zusammengesetzte Gliederband eine glatte Außenfläche auf, was in Abhängigkeit von dem zu transportierenden Stückgut oder Schüttgut vorteilhaft sein kann.

In einer anderen Variante der Erfindung ist die Außenfläche des Gliedes und damit auch die Außenfläche des zusammengesetzten Gliederbandes dagegen strukturiert. Hierzu kann in dem Glied ein Loch angeordnet sein oder ein Mitnehmer, was an sich aus dem Stand der Technik bekannt ist. Bei dem Mitnehmer kann es sich beispielsweise um eine Bürste, eine Nadel, eine quer zur Bandlaufrichtung ausgerichtete elastische Lippe handeln oder aufgeklebte Bänder oder Streifen aus diversen Materialien wie Gewebe, Kunstleder, Kautschuk, Silikon oder Schaumstoff handeln. Die Außenflächen können auch durch aufbringen von Weich-Kunststoffen wie Weich-PVC (Polyvinylchlorid) oder TPE (Thermoplastische Elastomere) strukturiert werden.

Ferner ist zu erwähnen, dass das erfindungsgemäße Glied vorzugsweise materialhomogen ist. Dies bedeutet, dass das Glied einstückig aus einem einzigen, einheitlichen Material besteht, was eine kostengünstige Massenfertigung erleichtert.

Beispielsweise kann das Glied zumindest teilweise aus Kunststoff bestehen, insbesondere aus Kunststoffgewebe, Textilgewebe, Polyvinylchlorid (PVC), Acrylnitril-Butadien-Styrol (ABS), thermoplastischen Elastomeren (TPE), Polypropylen (PP), Urethan, Polyethylen (PE), Polyoxymethylen (POM), Polybutylenterephthalat (PBT) oder Polyamid (PA). Es besteht jedoch auch die Möglichkeit, dass das erfindungsgemäße Glied mindestens teilweise aus Metall oder Edelstahl besteht, insbesondere aus Metallgewebe.

Weiterhin besteht im Rahmen der Erfindung die Möglichkeit, dass das Glied aus unterschiedlichen Materialien besteht, die sich beispielsweise hinsichtlich ihrer Härte und Elastizität unterscheiden können. Beispielsweise kann das Glied aus einer Kombination aus relativ hartem ABS und relativ elastischem TPE bestehen, wobei das Glied einteilig oder mehrteilig sein kann.

In einer Variante der Erfindung weist das Glied zusätzlich zu dem Rastelement eine quer zur Bandlaufrichtung verlaufende Quernut zur formschlüssigen Verbindung des Gliedes mit einem benachbarten Glied auf, das eine entsprechend angepasste und quer zur Bandlaufrichtung verlaufende Feder aufweist, die in die Quernut eingeschoben werden kann, um die formschlüssige Verbindung zu bilden. Bei einer solchen Gestaltung weist das erfindungsgemäße Glied also an den beiden in Bandlaufrichtung gegenüberliegenden Enden unterschiedliche Verbindungselemente auf, nämlich einerseits ein Rastelement zur Herstellung einer Rastverbindung und andererseits die Quernut zur Herstellung der formschlüssigen stiftartigen Verbindung. Das zusammengesetzte Gliederband besteht hierbei also nicht aus baugleichen Gliedern, sondern aus unterschiedlichen Gliedern, wie später noch detailliert beschrieben wird.

Die Quernut in dem Glied weist hierbei vorzugsweise einen runden Innenquerschnitt auf, während die Feder in dem angrenzenden Glied einen entsprechend angepassten runden Außenquerschnitt aufweist, so dass die Feder quer zur Bandlaufrichtung und damit bezüglich der Quernut axial in die Quernut eingeschoben werden kann, um die formschlüssige Verbindung zwischen den benachbarten Gliedern herzustellen.

Die Quernut geht hierbei vorzugsweise in Bandlaufrichtung in einen quer zur Bandlaufrichtung verlaufenden Schlitz über, durch den im montierten Zustand ein Materialsteg des angrenzenden Gliedes verläuft, wobei der Materialsteg die Feder des angrenzenden Gliedes mit dem Rest des angrenzenden Gliedes verbindet. Der Schlitz verläuft hierbei vorzugsweise schräg zur Außenfläche, insbesondere in einem Winkel von ungefähr 45° zur Außenfläche, was sich als vorteilhaft erwiesen hat.

Weiterhin ist zu erwähnen, dass die Erfindung nicht auf das vorstehend beschriebene neuartige Glied als einzelnes Bauteil beschränkt ist, sondern auch Schutz für ein komplettes Gliederband beansprucht, das aus derartigen Gliedern zusammengesetzt ist.

Das Gliederband ist vorzugsweise als Transportband zum Transportieren von Stückgut ausgebildet. Es ist jedoch alternativ auch möglich, dass das erfindungsgemäße Gliederband als Förderband ausgebildet ist, um Schüttgut zu fördern. Ferner besteht auch die Möglichkeit, dass das erfindungsgemäße Gliederband als Treibriemen zur Kraftübertragung in einem Riemenantrieb dient.

Bei einem derartigen Gliederband ist es selbstverständlich, dass in Bandlaufrichtung hintereinander mehrere Glieder angeordnet sind. Darüber hinaus besteht jedoch auch die Möglichkeit, dass das Gliederband mehrere Glieder aufweist, die bezüglich der Bandlaufrichtung nebeneinander angeordnet sind, wodurch sich die Bandbreite erhöhen lässt.

Bei einer derartigen Anordnung mehrerer Glieder nebeneinander besteht die Möglichkeit, dass die in Bandlaufrichtung hintereinander angeordneten Glieder seitlich zueinander versetzt sind.

Es wurde bereits eingangs bei der Beschreibung des erfindungsgemäßen Gliedes erwähnt, dass das fertige Gliederband wahlweise aus baugleichen oder aus unterschiedlichen Gliedern bestehen kann. So kann es vorteilhaft sein, wenn das Gliederband aus unterschiedlichen Gliedern besteht, die entweder im Wesentlichen starr oder im Wesentlichen elastisch sind. Hierbei sind die einzelnen elastischen Glieder in Bandlaufrichtung vorzugsweise von zwei benachbarten starren Gliedern umgeben, wobei die elastischen Glieder durch eine formschlüssige und/oder stoffschlüssige Verbindung mit den starren Gliedern verbunden sind, während die starren Glieder jeweils paarweise durch die Rastverbindung miteinander verbunden sind.
Weiterhin beansprucht die Erfindung Schutz für ein Gliederband gemäβ Anspruch 4.

Schließlich beansprucht die Erfindung auch Schutz für ein Gliederbandsystem gemäβ Anspruch 8, wie beispielsweise ein Transportsystem oder einen Riemenantrieb. Das erfindungsgemäße Gliederbandsystem weist das vorstehend beschriebene erfindungsgemäße Gliederband und zwei Umlenkrollen auf, wobei eine oder beide Umlenkrollen angetrieben sein können. Darüber hinaus weist das Gliederband bei dem erfindungsgemäßen Gliederbandsystem vorzugsweise eine Innenverzahnung auf, wobei unter dem oberen Trum des Gliederbandes eine Gleitführung angeordnet sein kann, auf der die Innenverzahnung des Gliederbandes entlang gleitet.

Weiterhin kann das erfindungsgemäße Gliederbandsystem eine Seitenführung aufweisen, um ein seitliches Auswandern des Gliederbandes auf den Umlenkrollen zu verhindern. Die Seitenführung kann dabei so angeordnet sein, dass lediglich eine Überdeckung zwischen der Seitenführung und der Innenverzahnung auftritt, wohingegen die Seitenverzahnung nicht bis zu der Außenfläche des Gliederbandes reicht.

Schließlich umfasst die Erfindung auch eine Demontagezange gemäβ Anspruch 11, die geeignet ist, um die Rastverbindung der angrenzenden Glieder zu lösen.

Die erfindungsgemäße Demontagezange weist einen kopfseitig offenen Aufnahmeschlitz auf, in den das Gliederband bei der Demontage eingeschoben werden kann. Die Demontagezange wird also bei der Demontage im Bereich von zwei miteinander verrasteten Gliedern seitlich auf das Gliederband aufgeschoben, wobei der Aufnahmeschlitz das Gliederband aufnimmt. Der vorstehend erwähnte Aufnahmeschlitz für das Gliederband verläuft rechtwinklig zur Schwenkebene der beiden Hebelarme.

Die erfindungsgemäße Demontagezange hat zwei einseitige Hebelarme, die an ihren distalen Enden durch ein Gelenk schwenkbar miteinander verbunden sind

Weiterhin ist zu erwähnen, dass die beiden Hebelarme der erfindungsgemäßen Demontagezange im Bereich des Zangenkopfes innen jeweils eine Klemmbacke aufweisen, wobei die beiden Klemmbacken bei der Demontage von außen gegenläufig auf die Rastelemente drücken, um die Rastverbindung zu lösen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht eines erfindungsgemäßen Gliederbandes in zusammengesetztem Zustand,
- Figuren 2A, 2B: Perspektivansichten von zwei baugleichen Gliedern des Gliederbandes gemäß Figur 1, wobei die beiden Glieder durch eine Rastverbindung miteinander verbunden werden können,
- Figur 3: eine Perspektivansicht eines weiteren Ausführungsbeispiels eines erfindungsgemäßen Gliederbandes im zusammengesetzten Zustand,
- Figur 4A: eine Perspektivansicht eines elastischen Glieds des Gliederbandes gemäß Figur 3,
- Figuren 4B, 4C: Perspektivansichten von starren Gliedern des Gliederbandes gemäß Figur 3,
- Figur 5: eine Perspektivansicht einer Abwandlung des Gliederbandes gemäß Figur 3 mit Mitnehmern,
- Figur 6: eine Perspektivansicht eines erfindungsgemäßen Gliederbandes,
- Figur 7: eine Perspektivansicht eines Ausschnitts eines erfindungsgemäßen Gliederbandes, bei dem die in Transportrichtung hintereinander liegenden Glieder seitlich zueinander versetzt sind,
- Figur 8: mehrere Glieder eines erfindungsgemäßen Gliederbandes in einer Perspektivansicht, wobei das mittlere Glied gelocht ist,
- Figur 9: eine andere Perspektivansicht des Ausführungsbeispiels gemäß Figur 8, wobei das mittlere Glied nicht gelocht ist,
- Figur 10: eine Seitenansicht von zwei Gliedern mit einer Rastverbindung, die zusätzlich durch eine Klebeverbindung gesichert ist,
- Figur 11: eine Perspektivansicht eines Teils eines erfindungsgemäßen Gliederbandes mit Lippen, die von der fördergutseitigen Oberfläche hervorstehen,
- Figur 12: eine Abwandlung von Figur 11,
- Figur 13A: eine Perspektivansicht einer erfindungsgemäßen Demontagezange zur Demontage des Gliederbands gemäß Figur 1, sowie
- Figur 13B: eine Perspektivansicht der Demontagezange gemäß Figur 13A beim Lösen der Rastverbindung.

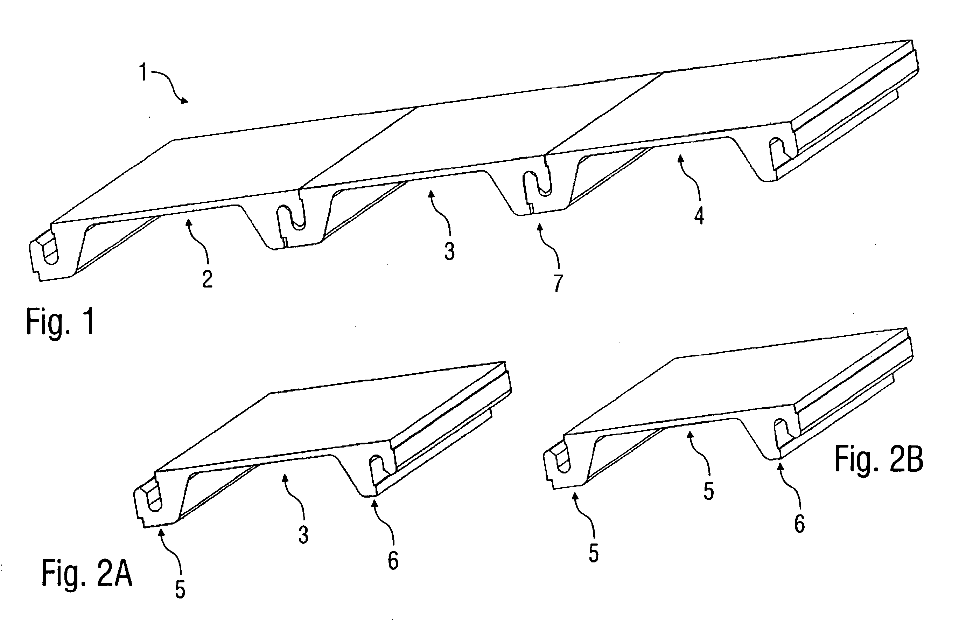

Figur 1 zeigt ein erfindungsgemäßes Gliederband 1, das beispielsweise zum Transportieren von Stückgut eingesetzt werden kann.

Das Gliederband 1 besteht aus zahlreichen Gliedern 2, 3, 4, die jeweils paarweise durch eine Rastverbindung formschlüssig miteinander verbunden werden können, um das Gliederband 1 zusammen zu setzen.

Hierzu weisen die einzelnen Glieder 2-4 an den in Bandlaufrichtung gegenüber liegenden Enden komplementär geformte Rastelemente 5, 6 auf, wobei das Rastelement 6 an dem Glied 3 im zusammengesetzten Zustand in das Rastelement 5 an dem Glied 4 eingreift und eine formschlüssige Rastverbindung bildet.

Zur Herstellung der Rastverbindung werden die beiden Rastelemente 5, 6 quer zur Bandlaufrichtung und quer zur Bandebene zusammengedrückt, was ohne Werkzeug erfolgen kann, was die Montage des Gliederbandes 1 erleichtert. Die Rastverbindung zwischen den benachbarten Gliedern 3, 4 kann auch wieder manuell getrennt werden, indem die angrenzenden Glieder 3, 4 des Gliederbandes 1 quer zur Bandebene auseinander gezogen werden. Hierbei ist zu erwähnen, dass die zum Zusammenfügen der Rastelemente 5, 6 erforderliche Fügekraft wesentlich kleiner ist als die zum Trennen der Rastelemente 5, 6 erforderliche Trennkraft. Die Rastverbindung kombiniert dadurch also den Vorteil einer leichten Montage mit geringen Bedienkräften mit dem Vorteil einer großen mechanischen Belastbarkeit der Rastverbindung.

Darüber hinaus ist zu erwähnen, dass die Rastrichtung rechtwinklig zur Bandlaufrichtung und rechtwinklig zur Bandebene ausgerichtet ist. Dies bietet den Vorteil, dass die in dem Gliederband 1 im Betrieb auftretenden Zugkräfte nicht zu einem unbeabsichtigten Lösen der Rastverbindung führen können.

Weiterhin ist zu erwähnen, dass die komplementär geformten Rastelemente 5, 6 im zusammengesetzten Zustand jeweils paarweise einen Zahn 7 einer Innenverzahnung bilden, wobei die Innenverzahnung beispielsweise einen Antrieb des Gliederbandes 1 durch ein Zahnrad ermöglicht.

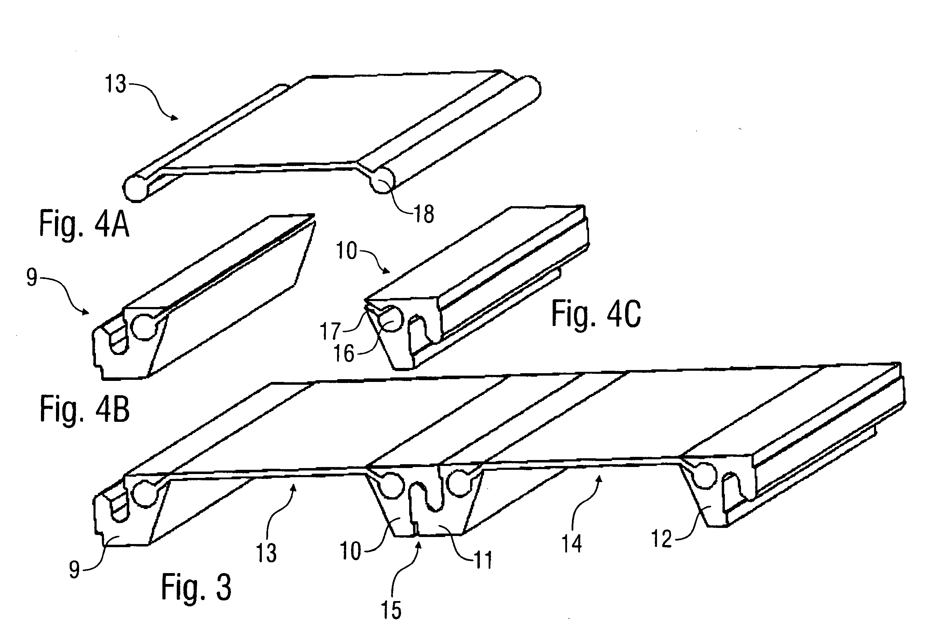

Figur 3 zeigt ein alternatives Ausführungsbeispiel eines erfindungsgemäßen Gliederbandes 8, das aus mehreren starren Gliedern 9, 10, 11, 12 und mehreren elastischen Gliedern 13, 14 besteht.

Die starren Elemente 10, 11 können hierbei durch eine Rastverbindung formschlüssig miteinander verbunden werden, wobei die Rastverbindung in der gleichen Weise funktioniert, wie die Rastverbindung bei dem Ausführungsbeispiel gemäß Figur 1, so dass diesbezüglich auf die vorstehende Beschreibung verwiesen wird.

Auch hierbei bilden die beiden starren Teile 10, 11 jeweils paarweise zusammen einen Zahn 15 einer Innenverzahnung, wobei ein Zahnrad in die Innenverzahnung eingreifen kann.

Die elastischen Glieder 13, 14 sind dagegen mit den starren Gliedern 9, 10 durch eine formschlüssige Verbindung verbunden. Hierzu weisen die starren Teile 9, 10, 11, 12 jeweils eine Quernut 16 mit einem kreisförmigen Innenquerschnitt auf, die in einen Schlitz 17 übergeht. Die elastischen Glieder 13 weisen zur Herstellung der formschlüssigen Verbindung mit den starren Gliedern 9, 10, 11, 12 beidseitig jeweils eine Feder 18 mit einem kreisförmigen Außenquerschnitt auf, wobei die Feder 18 in die Quernut 16 axial eingeschoben werden kann, um die formschlüssige Verbindung herzustellen.

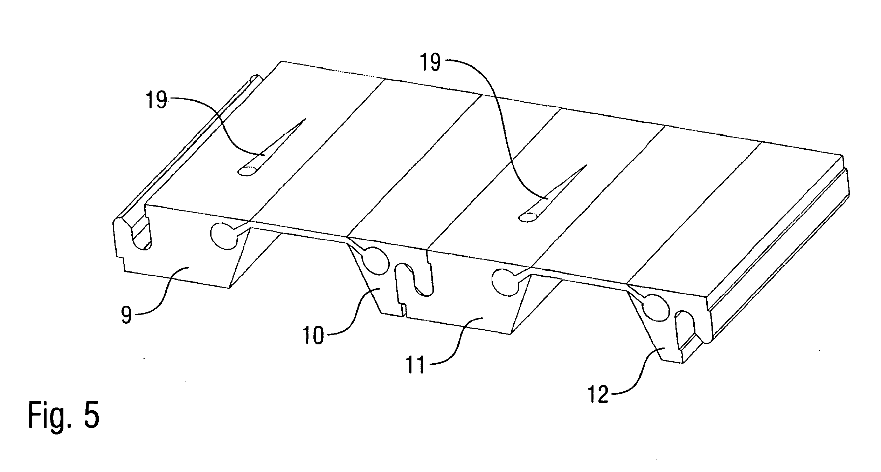

Figur 5 zeigt eine Abwandlung des Ausführungsbeispiels gemäß den Figuren 3, 4A-4C, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass an der Außenfläche der starren Glieder 9, 11 jeweils eine Aufnahmehülse 19, 20 angebracht ist, in die jeweils eine Nadel als Mitnehmer eingesetzt werden kann.

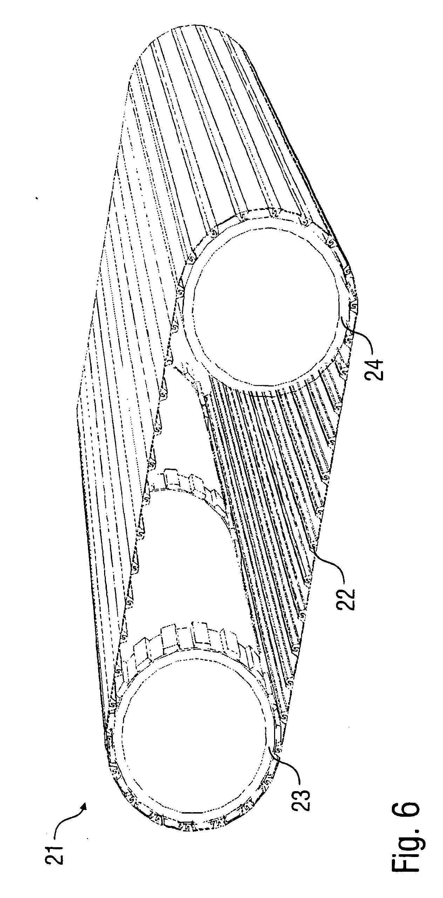

Schließlich zeigt Figur 6 ein komplettes Transportbandsystem 21 mit einem Gliederband 22, einem angetriebenen Zahnrad 23 und einer nicht angetriebenen Umlenkrolle 24.

Zu erwähnen ist hierbei, dass das Zahnrad 23 eine Axialverzahnung aufweist, die sich nicht über die gesamte Breite des Zahnrades 23 erstreckt.

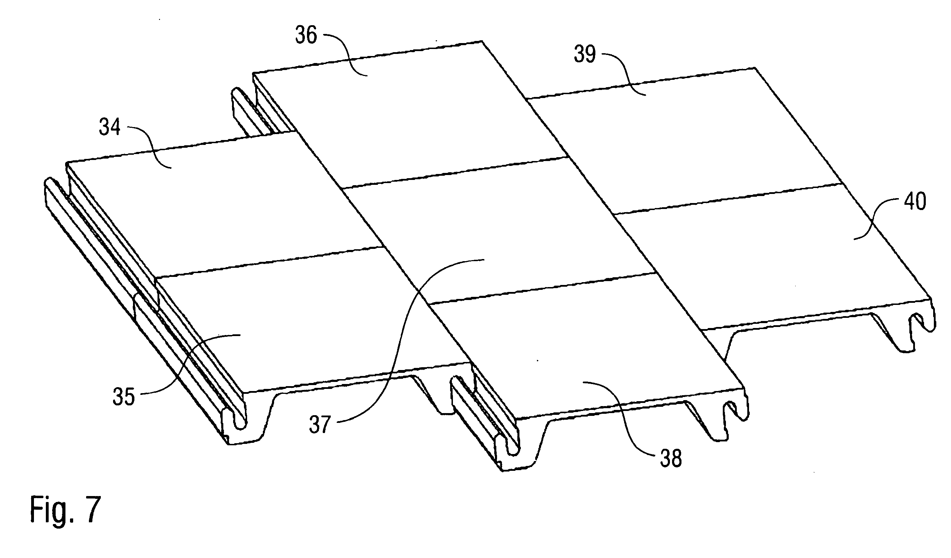

Figur 7 zeigt eine Perspektivansicht eines Ausschnitts eines erfindungsgemäßen Gliederbandes mit mehreren Gliedern 34-40, die jeweils durch Rastverbindungen miteinander verbunden sind, wobei die Art der Rastverbindung bereits vorstehend beschrieben wurde, so dass zur Vermeidung von Wiederholungen auf die vorstehende Beschreibung verwiesen wird.

Eine Besonderheit dieses Ausführungsbeispiels besteht darin, dass seitlich nebeneinander mehrere Glieder angeordnet sind, wobei die in Förderrichtung hintereinanderliegenden Glieder seitlich zueinander versetzt sind. Beispielsweise ist das Glied 34 seitlich zu den Gliedern 36, 37 versetzt.

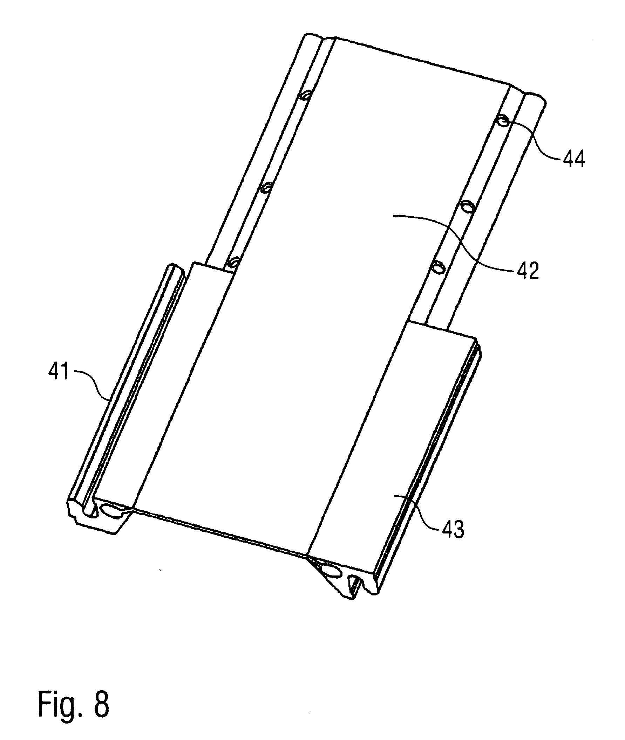

Figur 8 zeigt eine Perspektivansicht von drei Gliedern 41-43 eines erfindungsgemäßen Gliederbandes, wobei die Glieder 41, 43 aus Kunststoff bestehen und deshalb relativ hart sind, während das mittlere Glied 42 aus textilen Material besteht und deshalb relativ elastisch ist.

Das Glied 42 ist jeweils durch eine Nut-Feder-Verbindung mit den angrenzenden Gliedern 41, 43 verbunden.

Darüber hinaus ist zu erwähnen, dass das mittlere elastische Glied 42 Löcher 44 aufweist, was bei einer Fertigung in einer Spritzgussmaschine oder in einem Extruder vorteilhaft ist. So fließt bei einem Spritzguss- oder Extrusionsprozess Kunststoff durch die Löcher 41, wobei der Kunststoff anschließend abkühlt und aushärtet, was eine noch festere Verbindung ergibt.

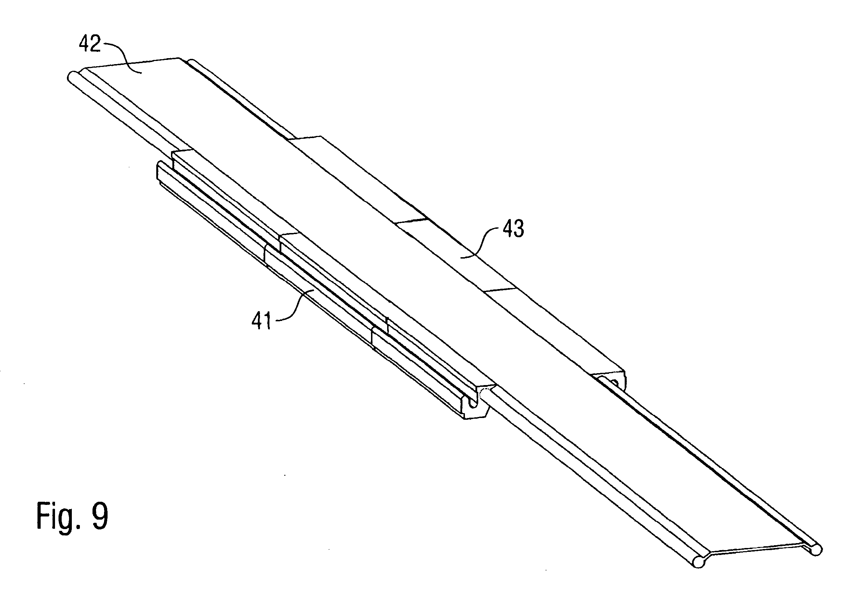

Figur 9 zeigt das Gliederband gemäß Figur 8, bei dem das elastische Glied nicht gelocht ist.

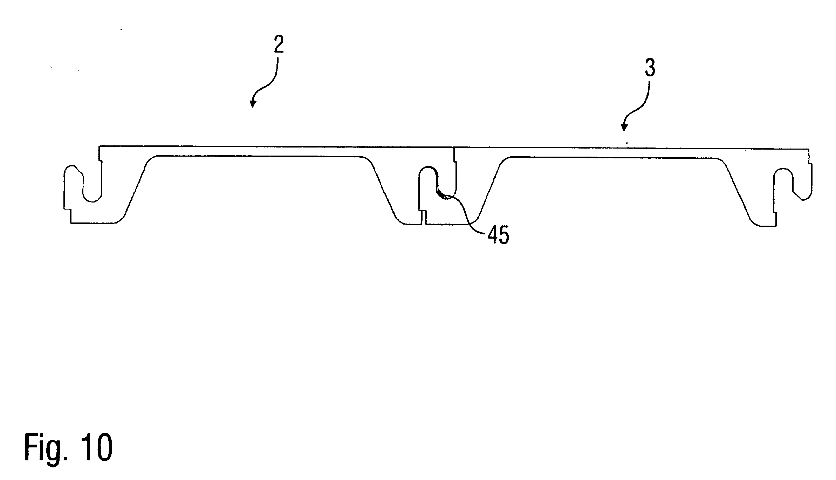

Figur 10 zeigt zwei erfindungsgemäße Glieder 2, 3, die weitgehend mit dem Ausführungsbeispiel gemäß Figur 1 übereinstimmen, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Rastverbindung zwischen den angrenzenden Gliedern 2, 3 zusätzlich durch eine Klebeverbindung 45 gesichert ist.

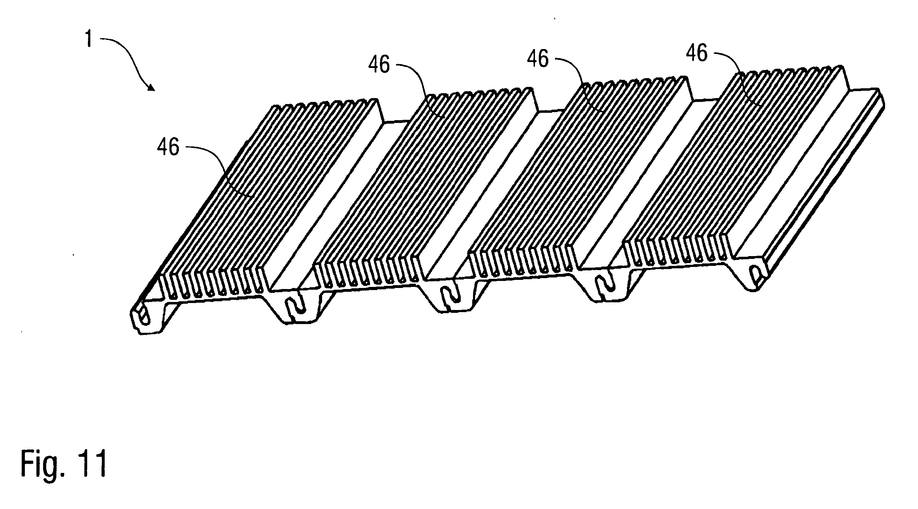

Figur 11 zeigt eine Perspektivansicht eines erfindungsgemäßen Gliederbands 1, das weitgehend mit dem vorstehend beschriebenen und in Figur 1 dargestellten Gliederbands 1 übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die einzelnen Glieder auf der dem Transportgut zugewandten Seite Lippen 46 aufweisen, die quer zur Förderrichtung verlaufen und elastisch nachgiebig sind.

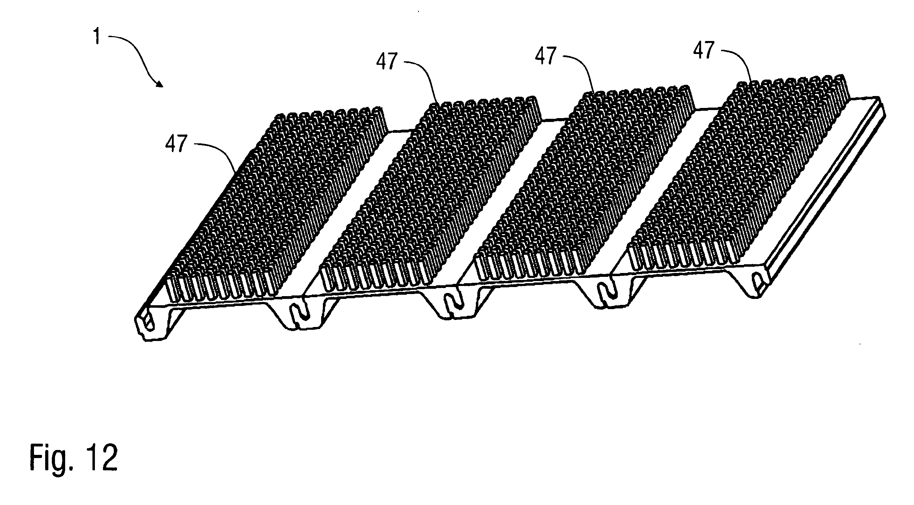

Das Ausführungsbeispiel gemäß Figur 12 stimmt weitgehend mit dem vorstehend beschriebenen und in Figur 11 dargestellten Ausführungsbeispiel überein, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass anstelle der Lippen 46 Bürsten 47 vorgesehen sind, die jeweils einzeln nach oben hervorstehen und elastisch nachgeben können.

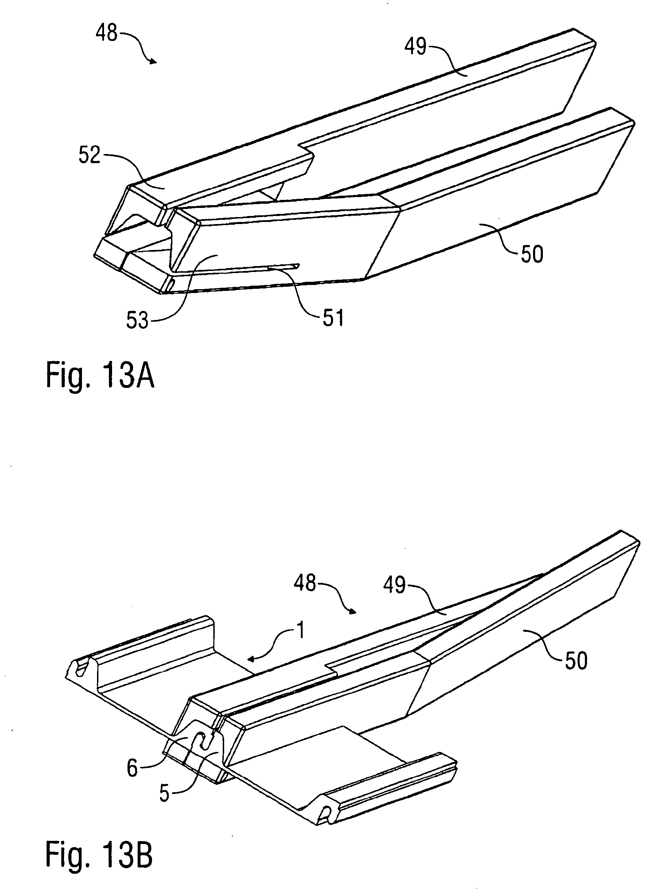

Die Figuren 13A und 13B zeigen eine erfindungsgemäße Demontagezange 48 zum Lösen der Rastverbindung bei dem Gliederband 1 gemäß Figur 1.

Die Demontagezange 48 weist zwei einseitig angelenkte Hebelarme 49, 50 auf, die in einer Schwenkebene relativ zueinander schwenkbar sind.

Weiterhin weist die Demontagezange 48 einen Zangenkopf mit einem Einführschlitz 51 auf, der kopfseitig offen ist, so dass die Demontagezange 48 seitlich auf das verrastete Gliederband 1 aufgeschoben werden kann.

Der Zangenkopf der Demontagezange 48 weist weiterhin zwei Klemmbacken 52, 53 auf. Beim Herunterdrücken des Hebelarms 50 drückt die Klemmbacke 53 von oben auf das Rastelement 5, wodurch sich die Rastverbindung löst.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den durch die Patentansprüche bestimmten Schutzbereich fallen.

### Bezugszeichenliste:

- 1: Gliederband
- 2: Glied
- 3: Glied
- 4: Glied
- 5: Rastelement
- 6: Rastelement
- 7: Zahn
- 8: Gliederband
- 9: Starres Glied
- 10: Starres Glied
- 11: Starres Glied
- 12: Starres Glied
- 13: Elastisches Glied
- 14: Elastisches Glied
- 15: Zahn
- 16: Quernut
- 17: Schlitz
- 18: Feder
- 19: Aufnahmehülse
- 20: Aufnahmehülse
- 21: Transportbandsystem
- 22: Gliederband
- 23: Zahnrad
- 24: Umlenkrolle
- 34-40: Glieder
- 41-43: Glieder
- 44: Löcher
- 45: Klebeverbindung
- 46: Lippen
- 47: Bürsten
- 48: Demontagezange
- 49, 50: Hebelarme
- 51: Einführschlitz
- 52, 53: Klemmbacken

## Patentansprüche

1. Glied (2-4; 9-12) für ein Gliederband (1; 8; 22), insbesondere für ein Transportgliederband, mit zwei komplementären Rastelementen (5, 6) an den in Bandlaufrichtung gegenüber liegenden Enden des Gliedes zur Herstellung einer formschlüssigen Rastverbindung mit einem komplementären Rastelement (5, 6) eines angrenzenden weiteren Glieds (2-4; 9-12) des Gliederbandes (1; 8; 22), wobei mehrere baugleiche Glieder (2-4; 9-12) zu dem Gliederband (1; 8; 22) zusammengesetzt werden können,
**gekennzeichnet durch**
eine Verzahnung, wobei die komplementären Rastelemente (5, 6) zweier benachbarter Glieder (2-4; 9-12) im zusammengesetzten Zustand jeweils paarweise gemeinsam einen Zahn (7) der Verzahnung bilden.

2. Glied (2-4; 9-12) nach Anspruch 1, **dadurch gekennzeichnet, dass** die Verzahnung (7) innen oder außen angeordnet ist.

3. Glied (2-4; 9-12) nach einem der vorhergehenden Ansprüche, **dadurch gekennzeichnet, dass** die Rastverbindung so ausgebildet ist, dass das zusammengesetzte Gliederband (1; 8; 22) an den Stoßstellen benachbarter Glieder (2-4; 9-12) eine im wesentlichen glatte, absatzfreie, lückenlose und/oder ebene Außenfläche oder Innenfläche aufweist ist.

4. Gliederband (1; 8; 22) mit mehreren Gliedern (2-4; 9-12) nach einem der vorhergehenden Ansprüche.

5. Gliederband (1; 8; 22) nach Anspruch 4, **gekennzeichnet durch** eine Ausbildung als
a) Transportband zum Transportieren von Stückgut oder
b) Förderband zum Fördern von Schüttgut oder
c) Treibriemen zur Kraftübertragung in einem Riemenantrieb.

6. Gliederband (1; 8; 22) nach einem der vorhergehenden Ansprüche, **dadurch gekennzeichnet, dass** das Gliederband (1; 8; 22) aus unterschiedlichen Gliedern (2-4; 9-12) besteht, die entweder im Wesentlichen starr oder im Wesentlichen elastisch sind.

7. Gliederband (1; 8; 22) nach Anspruch 6, **dadurch gekennzeichnet,**
a) **dass** die einzelnen elastischen Glieder (2-4; 9-12) in Bandlaufrichtung jeweils von zwei benachbarten starren Gliedern (2-4; 9-12) umgeben sind, und/oder
b) **dass** die elastischen Glieder (2-4; 9-12) durch eine formschlüssige und/oder stoffschlüssige Verbindung mit den starren Gliedern (2-4; 9-12) verbunden sind, und/oder
c) **dass** die starren Glieder (2-4; 9-12) jeweils paarweise durch die Rastverbindung miteinander verbunden sind.

8. Gliederbandsystem, insbesondere Transportsystem oder Riemenantrieb, mit
a) einem Gliederband (1; 8; 22) nach einem der Ansprüche 4 bis 7 mit einem oberen Trum und einem unteren Trum, und
b) zwei Umlenkrollen, um die das Gliederband (1; 8; 22) herum geführt ist, und
c) einer Innenverzahnung des Gliederbandes.

9. Gliederbandsystem nach Anspruch 8, **gekennzeichnet durch** eine Gleitführung, die unter dem oberen Trum angeordnet und auf der die Innenverzahnung des oberen Trums entlang gleitet.

10. Gliederbandsystem nach Anspruch 8 oder 9, **gekennzeichnet durch** eine Seitenführung, die seitlich neben der Innenverzahnung einseitig oder beidseitig angeordnet ist.

11. Demontagezange (48) zum Lösen der Rastverbindung zwischen zwei Gliedern nach einem der Ansprüche 1 bis 3, mit
a) einem Zangenkopf mit einem kopfseitig offenen Aufnahmeschlitz (51), in den das Gliederband bei der Demontage eingeschoben werden kann, wobei der Aufnahmeschlitz (51) für das Gliederband rechtwinklig zur Schwenkebene von zwei Hebelarmen (49, 50) verläuft, und
b) zwei einseitigen Hebelarmen (49, 50), die an ihren distalen Enden durch ein Gelenk schwenkbar miteinander verbunden sind, wobei die Hebelarme (49, 50) parallel zur Rastrichtung der Rastverbindung und rechtwinklig zur Bandebene des Glieder bands schwenkbar sind,
c) wobei die beiden Hebelarme (49, 50) im Bereiche des Zangenkopfes innen jeweils eine Klemmbacke (52, 53) aufweisen, und
d) die beiden Klemmbacken (52, 53) bei der Demontage von außen gegenläufig auf die Rastelemente drücken, um die Rastverbindung lösen.

## Claims

1. Link (2-4; 9-12) for a link conveyor (1; 8; 22), particularly for a transport link conveyor, comprising two complementary latching elements (5, 6) at the opposite ends of the link in the direction of travel of the conveyor for creating a positive latching connection with a complementary latching element (5, 6) of an adjacent further link (2-4; 9-12) of the link conveyor (1; 8; 22), whereina plurality of identical links (2-4; 9-12) can be assembled to form the link conveyor (1; 8; 22),
**characterized by**
a toothing arrangement wherein the complementary latching elements (5, 6) of two adjacent links (2-4; 9-12) in the assembled state respectively in pairs form a tooth (7) of the toothing arrangement.

2. Link (2-4; 9-12) according to Claim 1, **characterized in that** the toothing arrangement (7) is disposed inside or outside.

3. Link (2-4; 9-12) according to any one of the preceding claims, **characterized in that** the latching connection is embodied such that the assembled link conveyor (1; 8; 22) at the junctions of adjacent links (2-4; 9-12) exhibits a substantially smooth, indentation-free, unbroken and/or flat external surface or internal surface.

4. Link conveyor (1; 8; 22) having a plurality of links (2-4; 9-12) according to any one of the preceding claims.

5. Link conveyor (1; 8; 22) according to claim 4, **characterized by** an embodiment as
a) a transport belt for transporting unit loads or
b) a conveyor belt for conveying bulk material or
c) a drive belt for the purpose of power transmission within a belt drive.

6. Link conveyor (1; 8; 22) according to any one of the preceding claims, **characterized in that** the link conveyor (1; 8; 22) consists of different links (2-4; 9-12), which are either substantially rigid or substantially elastic.

7. Link conveyor (1; 8; 22) according to claim 6, **characterized in that**
a) the individual elastic links (2-4; 9-12) in the direction of travel of the conveyor are respectively flanked by two adjacent rigid links (2-4; 9-12) and/or
b) the elastic links (2-4; 9-12) are connected by a positive and/or flush fitting connection to the rigid links (2-4; 9-12) and/or
c) the rigid links (2-4; 9-12) are connected together respectively in pairs by means of the latching connection.

8. Link conveyor system, particularly transport system or belt drive having
a) a link conveyor (1; 8; 22) according to any one of claims 4 to 7 having an upper run and a lower run and
b) two deflection rollers around which the link conveyor (1; 8; 22) is guided and
c) an internal toothing of the link conveyor.

9. Link conveyor system according to claim 8, **characterized by** a sliding guide, which sliding guide is disposed beneath the upper run and slides along on the internal toothing of the upper run.

10. Link conveyor system according to claims 8 or 9, **characterized by** a lateral guide, which lateral guide is disposed laterally adjacent to the internal toothing on one side or both sides.

11. Dismantling pliers (48) for releasing the latching connection between two links according to any one of claims 1 to 3 comprising
a) a pliers head having an open mounting slot (51) at the head end, into which open mounting slot (51) the link conveyor can be inserted during dismantling, wherein the mounting slot (51) for the link conveyor travels at right angles with respect to the rotating plane of the two lever arms (49, 50),
b) two single-ended lever arms (49, 50), which single-ended lever arms (49, 50) at their distal ends are rotatably connected together by means of an articulation, wherein the lever arms (49, 50) are rotatable in parallel with respect to the latching direction of the latching connection and at right angles with respect to the plane of the conveyor of the link conveyor,
c) wherein the two lever arms (49, 50) exhibit in the area of the inside of the pliers head one clamping jaw (52, 53), respectively, and
d) the two clamping jaws (52, 53) press during the dismantling from the outside in opposite directions onto the latching elements in order to release the latching connection.

## Revendications

1. Patin (2-4 ; 9-12) pour une bande articulée (1 ; 8 ; 22), en particulier pour un convoyeur à bande articulée, avec deux éléments d'enclenchement (5, 6) complémentaires aux extrémités opposées du patin dans le sens de déplacement de la bande pour l'obtention d'une connexion par enclenchement mécanique avec un élément d'enclenchement (5, 6) complémentaire d'un autre patin (2-4 ; 9-12) adjacent de la bande articulée (1 ; 8 ; 22), plusieurs patins (2-4 ; 9-12) de construction identique pouvant ainsi être assemblés pour constituer la bande articulée (1 ; 8 ; 22)
**caractérisé par**
une denture, les éléments d'enclenchement (5, 6) complémentaires de deux patins (2-4 ; 9-12) adjacents formant ensemble par accouplement une dent (7) de la denture en état d'assemblage.

2. Patin (2-4 ; 9-12) selon la revendication 1, **caractérisé en ce que** la denture (7) est intérieure ou extérieure.

3. Patin (2-4 ; 9-12) selon l'une des revendications précédentes, **caractérisé en ce que** la connexion par enclenchement est réalisée de telle manière que la bande articulée (1 ; 8 ; 22) assemblée présente sur les joints entre patins (2-4 ; 9-12) adjacents une surface extérieure ou intérieure sensiblement lisse, exempte de saillie, exempte de lacune et/ou plane.

4. Bande articulée (1 ; 8 ; 22), comportant plusieurs patins (2-4 ; 9-12) selon l'une des revendications précédentes.

5. Bande articulée (1 ; 8 ; 22) selon la revendication 4, **caractérisée par** une réalisation sous forme de
a) bande de transport pour le transport de marchandises de détail, ou
b) convoyeur pour le transport de marchandises en vrac, ou
c) courroie de transmission pour la transmission d'un entraînement à courroie.

6. Bande articulée (1 ; 8 ; 22) selon l'une des revendications précédentes, **caractérisée en ce que** ladite bande articulée (1 ; 8 ; 22) est composée de patins (2-4 ; 9-12) différents, soit sensiblement rigides, soit sensiblement élastiques.

7. Bande articulée (1 ; 8 ; 22) selon la revendication 6, **caractérisée en ce que**
a) les différents (2-4 ; 9-12) élastiques sont enserrés chacun par deux patins (2-4 ; 9-12) rigides adjacents dans le in sens de déplacement de la bande, et/ou
b) les patins (2-4 ; 9-12) élastiques sont raccordés aux patins (2-4 ; 9-12) rigides par une connexion par correspondance de forme et/ou par une liaison matérielle, et/ou
c) les patins (2-4 ; 9-12) rigides sont raccordés par paires au moyen d'une connexion par enclenchement.

8. Système de bande articulée, en particulier système de transport ou transmission par courroie, comportant
a) une bande articulée (1 ; 8 ; 22) selon l'une des revendications 4 à 7, avec un brin supérieur et un brin inférieur, et
b) deux galets de renvoi, autour desquels la bande articulée (1 ; 8 ; 22) est guidée, et
c) une denture intérieure de la bande articulée.

9. Système de bande articulée selon la revendication 8, **caractérisé par** un guidage à glissement disposé sous le brin supérieur et qui glisse le long de la denture intérieure du brin supérieur.

10. Système de bande articulée selon la revendication 8 ou 9, **caractérisé par** un guidage latéral disposé latéralement à la denture intérieure, sur un côté ou sur les deux côtés.

11. Pince de démontage (48) permettant de desserrer la connexion par enclenchement entre deux patins selon l'une des revendications 1 à 3, comportant
a) une tête de pince avec une fente de réception (51) ouverte vers la tête, où la bande articulée peut être introduite pour le démontage, la fente de réception (51) pour la bande articulée s'étendant perpendiculairement au plan de pivotement des deux bras de levier (49, 50), et
b) deux bras de levier (49, 50) unidirectionnels, raccordés l'un à l'autre à leur extrémité distale par une articulation, de manière à pouvoir pivoter, lesdits bras de levier (49, 50) pouvant pivoter parallèlement à la direction d'enclenchement de la connexion par enclenchement et perpendiculairement au plan de la bande articulée,
c) les deux bras de levier (49, 50) étant pourvus chacun d'une mâchoire de serrage (52, 53) au niveau de la tête de pince, et
d) les deux mâchoires de serrage (52, 53) exerçant de l'extérieur des pressions opposées sur les éléments d'enclenchement lors du démontage, pour desserrer la connexion par enclenchement.
